# EUROPEAN PATENT APPLICATION

(11) **EP 4 365 017 A1**
(43) Date of publication of application: **08.05.2024**
(21) Application number: 23206983.1
(22) Date of filing: 31.10.2023
(51) Int. Cl.: B60N 2/10, B60N 2/16, B60N 2/20, B60N 2/06, B60N 2/30

(54) **SEAT ASSEMBLY ADJUSTABLE BY MEANS OF ONE SINGLE CONTROL**

(30) Priority: 04.11.2022 IT 202200022755
(71) Applicant: FERRARI S.p.A., 41100 Modena (IT)
(72) Inventor: IVE, Jonathan P., SAN FRANCISCO, 94124 (US); WHANG, Eugene, SAN FRANCISCO, 94124 (US); BATAILLOU, Jeremy, SAN FRANCISCO, 94124 (US); ASHCROFT, Anthony, SAN FRANCISCO, 94124 (US); ZHOU, Suhang, SAN FRANCISCO, 94124 (US); LOUZAOUEN, Benoit, SAN FRANCISCO, 94124 (US); KISS, Jemima, SAN FRANCISCO, 94124 (US); WILSON, Christopher, SAN FRANCISCO, 94124 (US); WAN, Wan Si, SAN FRANCISCO, 94124 (US); NATERA, Biotz, SAN FRANCISCO, 94124 (US); MCGRATH, James, SAN FRANCISCO, 94124 (US); GUYETT, Roger, SAN FRANCISCO, 94124 (US); LUXTON, Joseph, SAN FRANCISCO, 94124 (US); MATAS, Michael, SAN FRANCISCO, 94124 (US); KESSLER, Patrick, SAN FRANCISCO, 94124 (US); MORUZZI, Patrizio, 41100 MODENA (IT); DUSINI, Luca, 41100 MODENA (IT); PERGOLA, Marcello, 41100 MODENA (IT)
(74) Representative: Studio Torta S.p.A.

(57) **Abstract**

A seat assembly for a motor vehicle (1), the assembly comprising a seat (5) having a frame portion (9) and a rigid control body (8) coupled to the frame portion (9) in a movable manner relative to the frame portion (9) with at least four possible distinct movements, wherein the seat (5) further has a backrest (7) to support the back of a user and a base (6) transversal to the backrest (7) to support the lower limbs of the user, the backrest and the base (6, 7) each being independently rotatable around a pitch axis (Y), the seat assembly comprising driving means (10) configured to translate the seat (5) along a first direction (X), translate the seat along a second direction (7) distinct from the first direction, rotate the base (6) and rotate the backrest (7) in response to said four movements, respectively.

## Description

### CROSS-REFERENCE TO RELATED APPLICATIONS

This patent application claims priority from Italian patent application no. 102022000022755 filed on November 04, 2022, the entire disclosure of which is incorporated herein by reference.

### TECHNICAL FIELD

The invention relates to a seat assembly for a motor vehicle, in particular a sports motor vehicle.

### PRIOR ART

In some motor vehicles, at least one of the seat, for example the driver's seat, is adjustable or configurable.

In particular, a user, namely the person seated on the seat, can adjust the height of the seat in a vertical direction, the longitudinal position of the seat as well as the respective tilts of the backrest and of the base, namely the portion of the seat designed to support the lower limbs of the seated user.

The user normally uses a plurality of controls in the form, for example, of levers or handles to carry out the possible adjustments.

The controls are typically located in respective distinct areas or positions, which can typically be reached by the peripheral limbs, i.e. hands and feet, of the user seated on the seat.

Generally speaking, the adjustment or the possibility of configuring known seats needs to be improved.

More in particular, the comfort of the adjustment needs to be increased or the operations to be carried out to configure or adjust the seat in a complete manner need to be simplified.

An object of the invention is to fulfil at least one of the needs discussed above, preferably in a simple and reliable fashion.

### DESCRIPTION OF THE INVENTION

Said object is reached by a seat assembly as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle comprising a seat assembly according to the invention;
- figure 2 is a perspective view of the seat assembly;
- figure 3 is a flat front view, on a larger scale and with parts removed for greater clarity, of a control portion of the seat assembly of figure 2,
- figures 4 and 5 are cross-section views of the control portion according to respective section planes parallel to one another and indicated in figure 3 with lines IV-IV and V-V, respectively, and
- figures 6 - 8 are similar to figure 2 and show respective variants of the seat assembly.

### EMBODIMENTS OF THE INVENTION

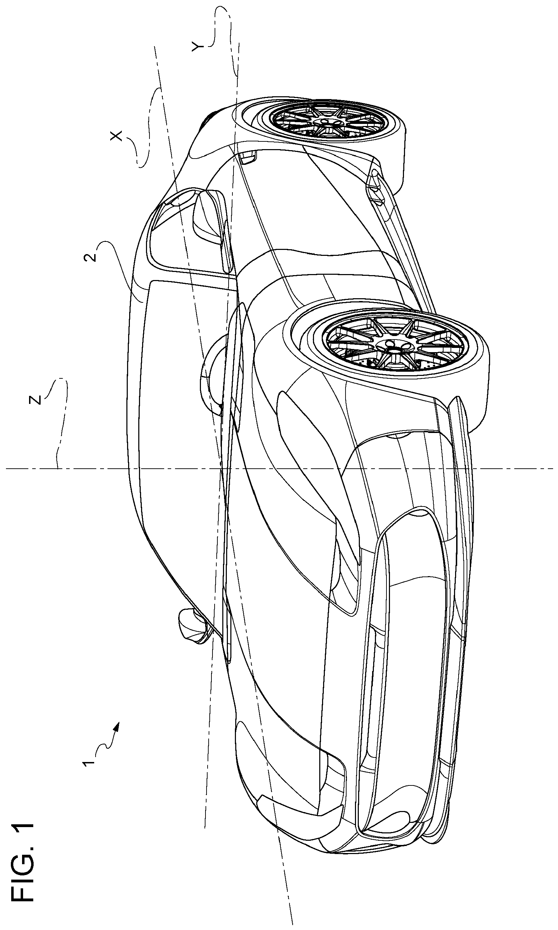

In figure 1, reference number 1 is used to indicate, as a whole, a motor vehicle.

The motor vehicle 1 has a travel direction or longitudinal direction, indicated in the drawings by an axis X, also known as roll axis of the motor vehicle 1.

The drawings further show two more axes Y, Z of the motor vehicle 1, also known as pitch axis and yaw axis of the motor vehicle 1.

The axis Y is a horizontal axis orthogonal to the travel direction of the motor vehicle 1, i.e. orthogonal to the axis X. The axis Z is orthogonal to the axes X, Y and has at least one vertical component. Generally speaking, the axis Z is orthogonal to the road surface on which the motor vehicle 1 travels.

The motor vehicle 1 comprises a body 2 defining a passenger compartment 3.

The motor vehicle 1 comprises a floorboard 4, which defines, in particular, a floor of the passenger compartment 3.

Furthermore, the motor vehicle 1 comprises a seat 5 inside the passenger compartment 3, for example for a passenger or for a driver of the motor vehicle 1, i.e. for a user.

More in detail, the seat 5 is mounted on the body 2 or on the floorboard 4 in a movable manner or, more precisely, so as to translate along the axis X, namely the longitudinal direction, and along the axis Z, namely the vertical direction, for example by means of suitable known guides that are not shown herein, in particular obtained on the body 2 or carried by the body 2 in a fixed position. More precisely, the guides are carried, for example by means of fastening with screws, by the floorboard 4 and/or by other portions of the body 2 adjacent to the floorboard 4.

The seat 5 comprises a base 6 and a backrest 7 to support the lower limbs and the back of the user seated on the seat 5, respectively.

The base 6 is transversal relative to the backrest 7. In particular, the base 6 comprises a first portion and a second portion, the second portion being movable relative to the first portion.

In addition, the base 6 and the backrest 7 are reclining or tilting, namely they can rotate around the axis Y. In other words, the base 6 and the backrest 7 are hinged, around axes that are parallel to the axis Y, to movable portions of the seat 5, optionally coinciding, for example coinciding with the second portion of the base 6.

The two possible translations of the seat 5 as well as the respective rotations of the base 6 and of the backrest 7 define four possible or admissible movements of the seat 5.

In addition, the seat 5 has a rigid control body 8 and a frame portion 9, to which the rigid control body 8 is coupled. More precisely, the frame portion 9 is movable, specifically translatable, along the axes X, Z, more in detail by means of the guides described above.

In particular, the base 6 comprises the frame portion 9, more in particular coinciding with a side end, namely according to the axis Y, of the base 6.

The body 8 is arranged so as to project from the frame portion 9 according to the axis Y. In this way, the body 8 can manually be grabbed and handled by the user.

Indeed, the body 8 is coupled to the frame portion 9 in a movable manner relative to the frame portion 9 with at least four possible movements, which are distinct from or independent of one another.

Since the frame portion 9 is movable, in particular along the axes X, Z, the body 8 always has the same control height relative to the user seated on the seat 5, regardless of the actual position of the seat 5.

Each distinct movement can be interpreted, for example, as a degree of freedom of the body 8 relative to the frame portion 9 or as an admissible virtual displacement representable by means of a displacement parameter that is independent of the ones corresponding to the other movements.

Herein, the term "independent" can mean that each distinct movement of the body 8 cannot be obtained as combination of the other distinct movements of the body 8. Therefore, each movement parameter is a scalar, for example a distance or an angle, and is necessary and sufficient for an unequivocal identification of the corresponding distinct movement of the body 8 at least relative to a predetermined reference point.

Basically, each distinct movement of the body 8 can be identified or recognised in a direct and unequivocal manner relative to the other distinct movements.

Each one of the distinct movements of the body 8 can be, for example, a translation movement along an axis or a rotation movement around and axis.

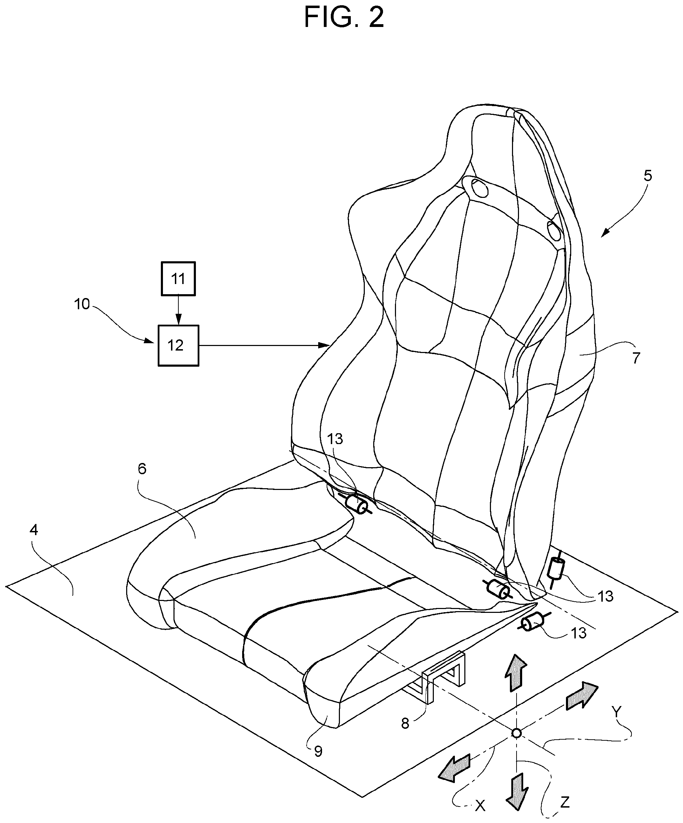

The body 8 can be, for example, a handle, a lever, a rod and the like. As shown in figure 2, the body 8 preferably is a handle.

The body 8 is rigid in that any pair of points belonging to it maintain a constant distance during any movement made by the body 8, unless there are movements consisting of inner deformations obtained by subjecting the body 8 to stresses suited to deform the body 8 itself.

The seat 5 is part of a seat assembly that comprises, in addition, a driving device or system 10 configured to translate the seat 5 along the longitudinal direction or the axis X, to translate the seat 5 along the vertical direction or the axis Z, to rotate the base 6 and to rotate the backrest 7, respectively, in response to the four distinct movements.

More in detail, the driving system 10 comprises a sensor assembly 11 configured to detect each one of the four distinct movements of the body 8 and to generate a corresponding signal indicative of the detected distinct movement. Therefore, in this way, the sensor assembly 11 can generate at least four signals, each one indicative of a corresponding movement of the four distinct movements of the body 8.

Furthermore, the driving system 10 comprises a control unit 12 connected to the sensor assembly 11 so as to receive signals generated by the latter. The control unit 12 is configured to obtain information from the signals; the information is indicative of the distinct movements of the body 8 that actually took place.

Furthermore, the driving system 10 comprises a plurality of actuators 13, specifically four actuators 13, to move the seat 5 according to its four admissible movements. In other words, each actuator 13 can specifically be controlled to carry out a corresponding movement of the four admissible movements of the seat 5.

The control unit 12 s configured to control the actuators 13 so as to move the seat 5, in particular according to the respective admissible movements of the seat 5, as a function of the information obtained from the signals generated by the sensor assembly 11 and concerning the four distinct movements of the body 8.

Basically, the control unit 12 controls the actuators 13 so as to move the seat 5 in a way corresponding to the distinct movements of the body 8.

According to a possible example, each one of the actuators 13 could potentially be controlled so as to move the seat 5 according to a specific movement of the admissible movements of the seat 5 as a function of the information concerning a corresponding movement of the four distinct movements of the body 8. Otherwise, the actuators 13 as a whole preferably cause, all together, a movement of the seat 5 according to the information concerning the four distinct movements as a whole.

In particular, the correspondence between each one of the four distinct movements of the body 8 and the corresponding movement of the four admissible movements of the body 5 through the driving system 10 can be a bijective function.

Furthermore, the correspondence can be an absolute correspondence, meaning that a specific position of the body 8 corresponds to one single position and/or orientation of the seat 5, or a relative correspondence, meaning that a movement of the body 8 from its current position corresponds to a movement of the seat 5 from its current position. In case of a relative correspondence, the relationship can be an incremental relationship, meaning that the execution of one of the distinct movements leads to the application of a corresponding change in the position of the seat 5, rather than the application of an entire corresponding movement. For instance, the applied change could even be constant, regardless of the specific features of the distinct movement carried out. Just to offer a clarifying practical example, a translation movement of the body 8 along a given direction, regardless of the extent of the translation movement, could correspond to the application of a speed of translation of the seat 5 along another direction, which would translate into a translation movement of the seat 5 given by the translation speed multiplied by the movement time of the body 8. As soon as the body 8 stops being moved, the seat 5 stops.

Going back to the distinct movements of the body 8, they can comprise or include two translation movements along respective distinct axes; more precisely, the body 8 can have a translation movement along the axis X and a translation movement along the axis Z, which are independent of one another.

In the specific case discussed herein, the axes X, Z are straight and orthogonal to one another, but this only is a non-limiting example; the translations could potentially take place also along curved or straight axes, which are transversal to one another, i.e. not necessarily orthogonal.

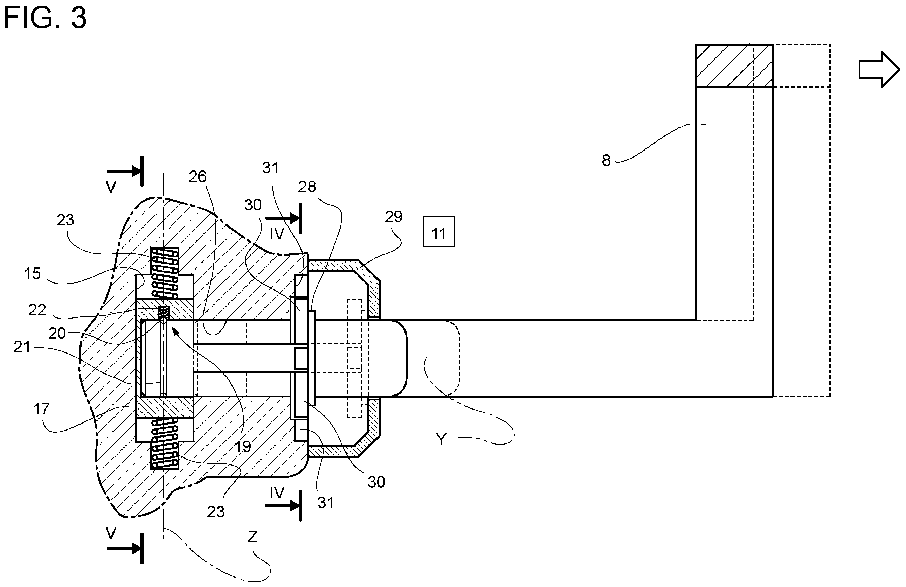

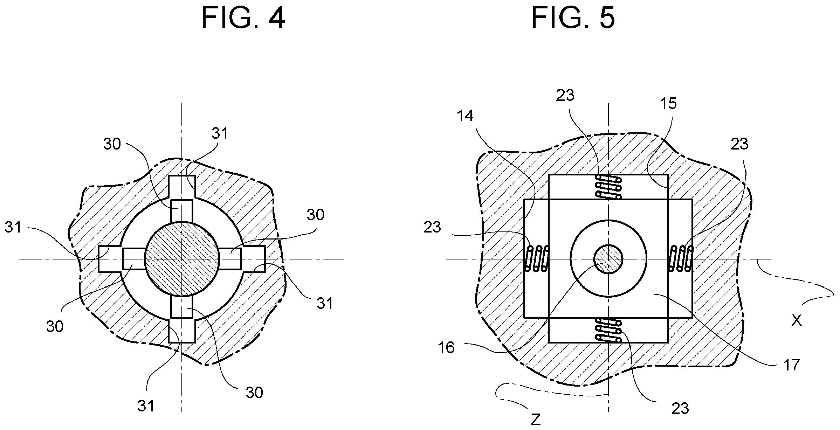

As shown in figures 3 and 5, the frame portion 9 comprises or defines guides 14, 15 to guide the two translation movements of the body 8.

In particular, the guides 14, 15 are straight guides along the axes X, Z, respectively. More in particular, the guides 14, 15 intersect in a junction point 16. For example, the junction point 16 is an intermediate point for both the paths defined by the guides 14, 15, as shown in figure 5. In other words, the guides 14, 15 are arranged in a cross-like configuration.

The seat 5 further comprises a slide portion 17 coupled to the guides 14, 15. The slide portion 17 can slide along the axes X, Z by sliding along the guides 14, 15, respectively.

The body 8 can be coupled to the slide portion 17 so that the body 8 has movements identical or corresponding to the ones of the slide portion 17. For the sake of clarity, the term "corresponding" does not imply an equality relationship, but one of one-way correspondence.

For example, the slide portion 17 comprises a bushing; the body 8 is coupled to the slide portion 17 by engaging the bushing. The bushing supports the rotation of the body 8, but prevents it from translating relative to the slide portion 17 along the axes X, Z. In particular, the body 8 engages the bushing since it is inserted into the bushing along the axis Y. Therefore, the axis Y defines the axis of the bushing; furthermore, the bushing supports the rotation of the body 8 around the axis Y.

The seat 5 preferably comprises a holding device 19 configured to lock, in a releasable manner, the relative position between the body 8 and the slide portion 17 along the axis of the bushing, i.e., in this specific case, along the axis Y.

For example, the holding device 19 can be a device for creating a snapping coupling between the body 8 and the slide portion 17. Alternatively, as shown in figure 3, the holding device 19 comprises a holding element 20, for example a ball, a seat 21 for the holding element 20 obtained on the body 8 and an elastic element 22, which couples the holding element 20 to the bushing in a radially yielding manner and so as to push the holding element 20 against the seat 21 on the body 8. In this way, the friction between the holding element 20 and the seat 21 on the body 8 locks, even though weakly, the relative axial position between the body 8 and the bushing.

The holding element 19 is releasable, for example by manually overcoming the locking action exerted by the holding device 19 upon the body 8. In this specific case, pulling the body 8 along the axis of the bushing is sufficient to overcome the friction between the holding element 20 and the seat 21 on the body 8, thereby releasing the holding device 19 and freeing the body 8 from the slide portion 17, in particular along the axis of the bushing, more in particular along the axis Y.

In the embodiment of figure 5, when the slide portion 17 is at the junction point 16, the slide portion 17 and, hence, the body 8 coupled thereto can be moved along any one of the guides 14, 15, i.e. along the axis X or along the axis Z.

On the other hand, when the slide portion 17 is at the ends of one of the guides 14, 15, i.e. on the outside of the junction point 16, the slide portion 17 cannot be moved along the other one of the guides 14, 15, but it needs to be brought back to the junction point 16 in order to take the other one of the guides 14, 15.

Therefore, with this configuration of the guides 14, 15, the two translation movements are mutually exclusive. However, the guides 14, 15 could clearly be configured in a different manner, for example so as to allow the two translation movements to be simultaneous. For example, the guides 14, 15 could be configured so as to allow the slide portion 17 and, hence, the body 8 to freely move on the plane defined by the axes X, Z.

The slide portion 17 is preferably coupled to the frame portion 9 by means of elastic devices 23 configured to provide corresponding elastic reactions in response to the translation movements of the slide portion 17, wherein the elastic reactions tend to move the slide portion 17 back to a rest position, in this specific case in the junction point 16. The rest position identifies a zero movement of the body 8 corresponding, in turn, to a stationary state of the seat 5.

One or each of the guides 14, 15 preferably is a two-way guide, namely it permits translation movements of the slide portion 17 and, hence, of the body 8 having opposite directions relative to the rest position and corresponding to translations of the seat 5 according to opposite directions relative to the stationary state by means of the driving system 10.

Besides the two translation movements described above, the four distinct movements also include two further movements respectively associated with corresponding axes, which, in this specific case, coincide with the axis Y or, more in general, are distinct from the axis X, Z.

Each one of the two movements could be a translation movement or a rotation movement along and around, respectively, the corresponding axis, without losing generality.

Specifically, the other two movements are rotation movements, in particular around the axis Y.

Therefore, in order to be distinct from one another, the two rotation movements around the axis Y have to be carried out in two distinct positions of the body 8.

As a matter of fact, the body 8 specifically has a fifth possible movement between the two distinct positions to carry out the two rotation movements around the axis Y.

In one of the two positions, specifically the one in which the body 8 is shown by means of solid lines in figure 3, one of the rotation movements is feasible, in particular together with the two translation movements, whereas, in the other one of the two positions, specifically the one in which the body 8 is shown by means of broken lines in figure 3, the other one of the two rotation movements is feasible.

In the embodiment of figure 3, when the body 8 is coupled to the slide portion 17, the two translation movements plus one of the rotation movements are feasible. In this position, the body 8 is more inserted in the frame portion 9 along the axis Y. On the other hand, when the body 8 is not constrained by the slide portion 17, i.e., in particular, when the body 8 is extracted from the bushing of the slide portion 17, the other one of the rotation movements is feasible. In this position, the body 8 is less inserted in the frame portion 9 along the axis Y, namely it is in an extracted position compared to the other position, according to the axis Y.

According to another additional or alternative point of view, one of the rotation movements, in particular together with the two translation movements, is unfeasible in one of the two positions, in particular the one in which the body 8 is not constrained to the slide portion 17, whereas the other one of the rotation movements is unfeasible in the other one of the two positions, in particular the one in which the body 8 is coupled to the slide portion 17.

The frame portion 9 comprises or defines a further guide 26 configured to guide the fifth movement of the body 8. The body 8 is coupled to the guide 26.

Herein, the fifth movement of the body 8 is a translation movement, in particular along the axis Y.

Therefore, the guide 26 is a straight guide; the body 8 is coupled to the guide 26 in a sliding manner, in particular along the axis Y.

In particular, in case the body 8 is coupled to the slide portion 17, the fifth movement of the body 8 is feasible when the slide portion 17 is in the rest position. Vice versa, more in particular, the fifth movement is not feasible when the slide portion 17 translates along one of the guides 14, 15 out of the rest position, i.e. on the outside of the junction point 16.

The guide 26 guides the body 8 towards the coupling to the slide portion 17. This coupling corresponds, in particular, to one of the two positions to carry out the two rotations movements of the body 8.

Furthermore, the guide 26 is configured to support the rotation of the body 8, in particular around the axis Y.

In particular the guide 26 comprises a hole 27 engaged by the body 8 in a sliding manner, in particular along the axis Y.

Preferably, the frame portion 9 and the body 8 comprise a limit stop element 29 and a striker portion 28, respectively. The body 8 has a limited stroke along the guide 26, wherein a limit of the stroke corresponds to the contact between the striker portion 28 and the limit stop element 29. In particular, the other limit of the stroke corresponds to the coupling of the body 8 to the slide portion 17.

Furthermore, the contact between the striker portion 28 and the limit stop element 29 could conveniently correspond to the position of the body 8 in which one of the rotation movements of the body 8 is feasible and/or in which the other one of the rotation movements of the body 8, in particular together with the two translation movements, is unfeasible. More in general, this last position could be any position of the body 8 when the latter is not constrained the slide portion 17 or, more precisely, is extracted from the bushing of the slide portion 17.

Therefore, the sensor assembly 11 of the driving system 10 is configured to detect when the body 8 is in the two positions and to detect each one of the rotation movements, respectively, only when the body 8 is in the corresponding one of the two positions.

Furthermore, the seat 5 preferably comprises a further elastic element, for example a known torsion spring which is not shown herein, which couples the body 8 to the frame portion 9 and is configured to exert an elastic reaction torque in response to the rotation movements of the body 8 from a reference position corresponding to a zero movement of the body 8 and of the seat 5. The elastic reaction torque tends to bring the body 8 back to the reference position.

The rotation of the body 8 around the axis Y is conveniently forbidden when the body 8 is coupled to the slide portion 17 and the latter is at the ends of the guides 14, 15, i.e. out of the rest position, namely, in particular, on the outside of the junction point 16.

In order to fulfil this last function, the body 8 comprises a plurality of radial teeth 30 relative to the axis Y. Correspondingly, the frame portion 9 has a plurality of seats 31 to accommodate the radial teeth 30.

The radial teeth 30 project towards the seats 31 when the body 8 is coupled to the slide portion 17 and the latter is in the rest position.

Furthermore, the seats 31 are arranged relative to the radial teeth 30 so that any translation along the guides 14, 15, namely along the axes X, Z, of the slide portion 17 and of the body 8 coupled thereto causes at least one of the radial teeth 30 to engage a corresponding seat 31, thus forbidding the rotation of the body 8. The seats 31 define, in turn, respective radial straight guides for the radial teeth 30, so that the translation of the slide portion 17 is not hindered.

More precisely, two radial teeth 30 are arranged in diametrically opposite positions of the body 8 and radially project along the axis Z. Other two radial teeth 30 are arranged in diametrically opposite positions of the body 8 and radially project along the axis X.

The driving system 10 is preferably configured to translate the seat 5 along its possible translation directions, namely, more precisely, along the axes X, Z, respectively in response to the two translation movements of the body 8, in particular along the axes X, Z, respectively.

Furthermore, the driving system 10 is configured to rotate the base 6 and the backrest 7 in response to the two rotation movements of the body 8, respectively. In particular, the driving system 10 rotates the backrest in response to the rotation movement of the body 8 to the more extracted position, i.e. to the position in which the body 8 is not constrained to or is extracted from the slide portion 17.

Hereinafter, an example of the operation of the seat assembly according to the invention will be described with reference to one of the distinct movements of the body 8. Examples of operation of the seat assembly with reference to the other distinct movements of the body 8 are substantially similar and can easily be assumed from the disclosure above.

In particular, the translation movement along the axis Z will be taken into consideration, with the aid of figure 3. The body 8 is coupled to the slide portion 17.

When the body 8 is lifted upward by the user, the body 8 transmits to the slide portion 17 an upward translation movement along the axis Z. The translation movement is countered, though not forbidden, by the elastic devices 23.

The sensor assembly 11 of the driving system 10 detects that the slide portion 17 moved along the axis Z from the rest position upward.

Based on this detection, the control unit 12 controls one of the actuators 13 so as to lift the seat 5 along the axis Z, for example with a constant lifting speed. The value of the lifting speed is, for example, independent of or proportional to the extent to which the user lifts the body 8.

When the user is satisfied of the lifting of the seat 5, the user releases the body 8. Because of the elastic devices 23, the slide portion 17 goes back to the rest position. The sensor assembly 11 detects this and, for this reason, the control unit 12 controls the relevant actuator 13 so as to stop the seat 5.

In order to lower the seat 5, the user carries out an identical, though reverse process in the direction along the axis Z; in this case, the user lowers the body 8 along the axis Z. Similarly to what described above, the driving system 10 lowers the seat 5 with a constant speed, until the user releases the body 8. Herein, the seat 5 is stopped by the driving system 10.

Owing to the above, the advantages of the seat assembly according to the invention are evident.

Thanks to the invention, the user can adjust the seat 5 in a totally versatile manner, handling one single control, namely the body 8.

The four distinct movements can all be easily carried out by the user by handling the body 8.

In particular, at least three of the distinct movements can be carried out starting from one single position of the body 8 along the axis Y.

On the other hand, the rotation of the backrest 7, which normally is the least frequent movement of the seat 5, can be enabled by simply moving the body 8 to a different axial position along the axis Y.

The gesture needed to enable the rotation of the backrest 7 is very simple, since it simply consists in pulling the body 8 along the axis Y according to a direction of extraction of the frame portion 9.

Finally, the motor vehicle 1 according to the invention can be subjected to changes and variants, which, though, do not go beyond the scope of protection set forth in the appended claims.

In particular, the fifth movement of the body 8 could also be used to adjust a movement of the seat, thus making one of the other four distinct movements of the body 8 superfluous.

The specific embodiment shown in figure 3 can be subjected to several mechanical variants.

Generally speaking, any mechanism that allows the body 8 to have four possible distinct movements is part of the invention.

Furthermore, numeral adjectives such as first, second, third, etcetera merely have an explanatory purpose and, therefore, should not necessarily be considered as limiting.

Finally, the mechanical parts described and shown herein can be available in a different number or with different shapes, without for this reason going beyond the scope of protection of the invention.

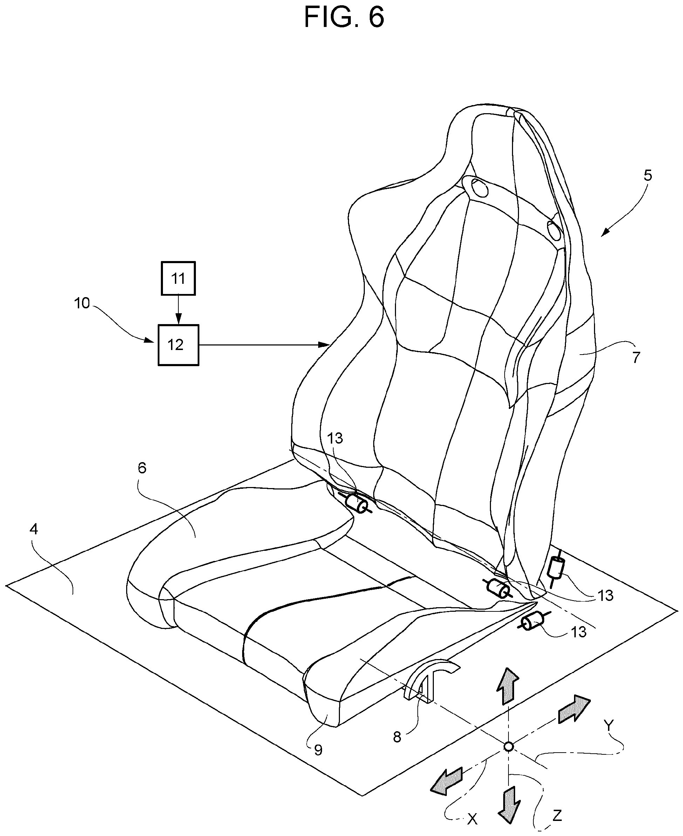

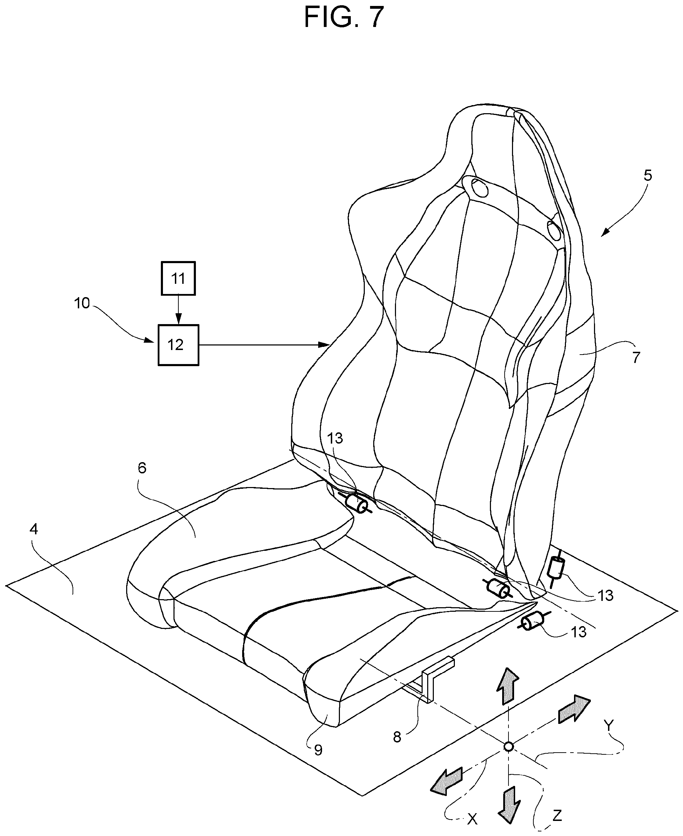

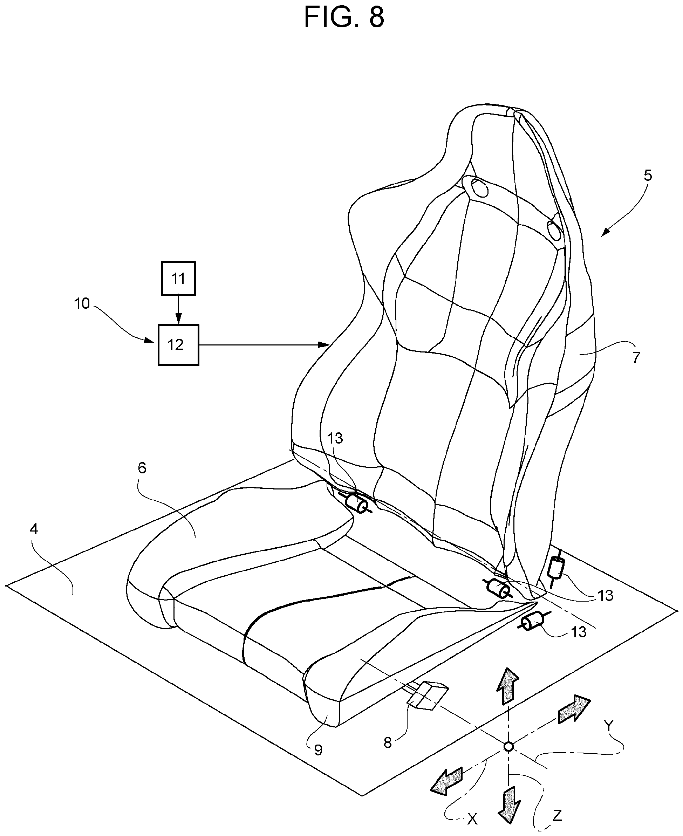

For example, the variants of figures 6 - 8 show respective distinct shapes of the body 8.

## Claims

1. A seat assembly for a motor vehicle (1), the assembly comprising a seat (5) having a frame portion (9) and a rigid control body (8) coupled to the frame portion (9) in a movable manner relative to the frame portion (9) with at least four possible distinct movements,
wherein the seat (5) further has a backrest (7) to support the back of a user and a base (6) transversal to the backrest (7) to support the lower limbs of the user, the backrest and the base (6, 7) each being independently rotatable around a pitch axis (Y),
the seat assembly comprising driving means (10) configured to translate the seat (5) along a first direction (X), translate the seat along a second direction (Z) distinct from the first direction, rotate the base (6) and rotate the backrest (7) in response to said four movements, respectively.

2. The seat assembly according to claim 1, wherein the rigid control body (8) has a further possible distinct movement defined by a fifth movement between a first position and a second position, whereby one of said four movements and the set of the other ones of said four movements are respectively feasible when the rigid control body (8) is in the second position and in the first position.

3. The seat assembly according to claim 1, wherein said four movements include
- a first translation movement along a first axis (X),
- a second translation movement along a second axis (Z) distinct from the first axis (X), and
- a third and a fourth movement associated with a third and a fourth axis (Y), respectively, distinct from the first and the second axis (X, Z).

4. The seat assembly according to claim 3, wherein the rigid control body (8) has a fifth possible movement between a first position and a second position, whereby the third movement, in particular together with the first and the second translation movement, and the fourth movement are respectively feasible when the rigid control body (8) is in the first position and in second position, and/or respectively unfeasible when the rigid control body (8) is in the second position and in the first position.

5. The seat assembly according to claim 3 or 4, wherein the third movement is a third movement of rotation around the third axis (Y).

6. The seat assembly according to claim 4 or 5, wherein the fifth movement is a fifth movement of translation along the third axis (Y).

7. The seat assembly according to any one of the claims from 3 to 6, wherein the fourth movement is a fourth movement of rotation around the fourth axis (Y).

8. The seat assembly according to claim 7, wherein the fourth axis (Y) coincides with the third axis (Y).

9. The seat assembly according to any one of the claims from 3 to 8, wherein the driving means (10) are configured to translate the seat (5) along the first and the second direction (X, Z) in response to the first and the second translation movement, respectively, as well as to rotate the base and the backrest (6, 7) in response to the third and the fourth movement, respectively.

10. The seat assembly according to any one of the claims from 3 to 9, wherein the first and the second axis (X, Z) are straight and coplanar to one another.

11. The seat assembly according to claim 10, wherein the third axis (Y) is orthogonal to the first and the second axis (X, Z).

12. A motor vehicle (1) comprising a seat assembly according to any one of the preceding claims.
